# EUROPÄISCHE PATENTSCHRIFT

(11) **EP 0 749 457 B1**
(45) Veröffentlichungstag und Bekanntmachung des Hinweises auf die Patenterteilung: **29.07.1998**
(21) Anmeldenummer: 95912164.1
(22) Anmeldetag: 25.02.1995
(51) Int. Cl.: C08J 11/06

(54) **VERFAHREN ZUR WIEDERGEWINNUNG VON ROHMATERIALIEN AUS MAGNETISCHEN AUFZEICHNUNGSTRÄGERN**
PROCESS FOR RECOVERING RAW MATERIALS FROM MAGNETIC RECORDING CARRIERS
PROCEDE DE RECUPERATION DE MATIERES PREMIERES A PARTIR DE SUPPORTS D'ENREGISTREMENT MAGNETIQUE

(30) Priorität: 09.03.1994 DE 4407900
(43) Veröffentlichungstag der Anmeldung: 27.12.1996
(73) Patentinhaber: EMTEC Magnetics GmbH, 67059 Ludwigshafen (DE)
(72) Erfinder: WÜNSCH, Thomas, D-67346 Speyer (DE); SARTOR, Karl-Heinz, D-77743 Neuried (DE); SCHULZE, Axel-Rüdiger, D-77654 Offenburg (DE); MÜLLER, Norbert, D-67159 Friedelsheim (DE); EICHER, Jochen, D-67434 Neustadt (DE); STEPHAN, Oskar, D-68766 Hockenheim (DE)
(86) Internationale Anmeldenummer: EP9500695
(87) Internationale Veröffentlichungsnummer: WO9524443

(56) Entgegenhaltungen:
- EP-A- 0 475 455
- GB-A- 2 202 837
- US-A- 5 127 958
- DATABASE WPI Derwent Publications Ltd., London, GB; AN 85-320393[51] & JP,A,60 223 835 (IWATA KASEI SANGYO) 8. November 1985
- DATABASE WPI Derwent Publications Ltd., London, GB; AN 88-320052 [45] & JP,A,63 237 912 (SANMARU KAGAKU KK) 4. Oktober 1988
- DATABASE WPI Derwent Publications Ltd., London, GB; AN 93-178178[22] & JP,A,5 109 060 (FUJI FHOTO FILM CO. LTD.) 15. Oktober 1991
- DATABASE WPI Derwent Publications Ltd., London, GB; AN 83-811461[45] & JP,A,58 166 016 (PANACK KOGYO KK) Januar 1083
- PATENT ABSTRACTS OF JAPAN vol. 8, no. 153 (P-287) 17. Juli 1984 & JP,A,59 052 433 (YASUO IWATA) 27. März 1984

## Beschreibung

Die Erfindung betrifft ein Verfahren zur Wiedergewinnung von Rohmaterialien aus kleingeschnittenen Abfällen von magnetischen Aufzeichnungsträgern, bestehend aus einem polymeren Schichtträger und einer darauf befindlichen Magnetschicht, bei der feinteiliges Magnetpulver in vernetztem oder unvernetztem polymeren Bindemittel dispergiert ist und wobei das Magnetpulver und das Schichtträgermaterial durch Behandlung in einem alkalischen Medium wiedergewonnen wird.

In den letzten Jahren hat das schnelle Wachstum der Informations-Industrie einen extensiven Verbrauch von magnetischen Speichermedien, wie Computer-Bänder, Audio-Bänder, Video-Bänder sowie Disketten in großem Umfang veranlaßt. Insbesondere sind Magnetbänder und Disketten, welche beispielsweise Polyethylen-Terephthalat als Schichtträger haben, aufgrund ihrer ausgezeichneten magnetischen und mechanischen Eigenschaften in den letzten Jahren in wachsendem Umfang hergestellt worden. Allgemein treten Reste und Abfälle solcher Speichermedien in großem Umfang bei der Herstellung und bei dem Gebrauch durch den Endverbraucher auf. Gegenwärtig werden solche Abfälle beseitigt, indem sie über den Hausmüll auf geordneten Deponien eingelagert oder in Verbrennungsöfen verbrannt werden. Unter dem Gesichtspunkt von Müllreduzierung sowie der Wiedergewinnung von Wertstoffen ist die volle Ausnutzung solcher Abfälle ein herausragendes Erfordernis.

Ein Verfahren der eingangs genannten gattungsmäßigen Art ist aus der DE-OS 33 41 608 bekannt. Nach der Lehre dieser Schrift werden die Magnetband-Abfälle kleingeschnitzelt, worauf die Magnetschicht in wässriger alkalischer Lösung vom Schichtträger abgelöst und anschließend die Trennung des Magnetpulvers vom Schichtträger durch Rührung bei hoher Geschwindigkeit durchgeführt wird. Dieses Verfahren erfordert eine sehr aufwendig aufgebaute voluminöse Apparatur.

Weitere Verfahren, die auf einer Trennung von Magnetschicht von dem Schichtträger durch Basenbehandlung beruhen, sind beschrieben in den Japanischen Anmeldungen 112 979 (1978), 006 985 (1979), 070 404 (1978), 092 879 (1978), 167 601 (1987) sowie der Koreanischen Anmeldung 89/03614. Eine säurebedingte Trennung beschreiben die Japanischen Anmeldungen 317 707 (1988), 112 413 (1989) sowie 146 624 (1982). In der Japanischen Anmeldung 054 050 (1983) wird die Verwendung eines Lösungsmittelgemisches aus Phenol- und Ethantetrachlorid zur Ablösung der Magnetschicht beschrieben.

Aus der US 5 246 503 ist eine aus organischem Lösemittel, Wasser, Verdicker und Netzmittel bestehende Entschichtungslösung für Farbüberzüge bekannt, bei der jedoch der Überzug zusätzlich mechanisch durch Abkratzen entfernt werden muß.

Beabsichtigt man das Ablösen der Magnetschicht vom Schichtträger und verfolgt dabei das Ziel, die Wertstoffe, insbesondere das Magnetpulver sowie das Polyethylenterephthalat wiederzugewinnen, sollte die PET-Folie möglichst nicht chemisch abgebaut oder angegriffen werden. Wenn andererseits in der magnetischen Schicht vernetzte Polyurethane, wie beispielsweise in der EP 0 099 533 beschrieben als Bindemittel verwendet werden, so versagen größtenteils die oben beschriebenen Verfahren oder ergeben unbefriedigende Ergebnisse bezüglich Trennung, Ablösung und Wiedergewinnung.

Aus der deutschen Anmeldung Aktenzeichen P 43 30 839.9 ist ein Verfahren zur Wiedergewinnung von Rohmaterialien aus magnetischen Aufzeichnungsträgern bekannt, bei welchem diese in kleingeschnittener Form in organischen Lösungsmitteln, einer darin löslichen Säure sowie Alkoholen oder Thioalkoholen und gegebenenfalls Tensiden bei erhöhter Temperatur behandelt werden, wobei die auf diese Weise abgelöste Magnetschicht vom Schichtträger durch einen Waschvorgang getrennt wird und wobei anschließend sowohl die kleingeschnitzelten Schichtträgerabfälle als auch die Magnetpulver getrocknet werden. Das Erfindungswesentliche an diesem Verfahren ist, daß durch das angegebene Behandlungsmedium die Estergruppen des Bindemittels Polyurethan durch Hydrolyse gespalten werden, während gleichzeitig die Estergruppen des Polyethylenterephthalat-Schichtträgers chemisch nicht zerstört werden. Es hat sich gezeigt, daß es schwierig ist, bei diesem Verfahren diese Randbedingungen zu erfüllen, außerdem müssen die kleingeschnitzelten Abfälle viele Stunden lang behandelt werden, um eine vollständige Trennung zu erreichen.

Daher lag der vorliegenden Erfindung die Aufgabe zugrunde, ein Verfahren der eingangs genannten gattungsmäßigen Art zu finden, bei welchem die Magnetschicht von der PET-Trägerfolie abgelöst wird, ohne diese chemisch zu spalten. Weiterhin sollte die Aufgabe gelöst werden, Reaktionsbedingungen zu finden, bei welchen nur eine kurze Reaktionszeit zum Ablösen und Trennen von Magnetpulver und Polyethylenterephthalat-Trägerfolie benötigt wird.

Völlig überraschend hat sich gezeigt, daß die Aufgabe dadurch gelöst werden konnte, indem die oben aufgeführten magnetischen Aufzeichnungsträger in kleingeschnittener Form in einem alkalischen Medium, bestehend aus dem Kaliumsalz von mehrfach ungesättigten Fettsäuren, einem oder mehreren organischen Lösungsmitteln sowie gegebenenfalls Wasser und gegebenenfalls einem geeigneten Katalysator unter Rühren und erhöhter Temperatur behandelt wird.

Anschließend wird das erfindungsgemäße Verfahren sowie die zur Durchführung des Verfahrens benötigten Apparaturen und Reaktionsbestandteile und Randbedingungen näher erläutert.

Das im Rahmen des erfindungsgemäßen Verfahrens verwendbare polymere Schichtträgermaterial kann aus Polyethylenterephthalat (PET), Polyethylennaphthalat (PEN), Polycarbonat, Cellulose, Polyamid, Polyimid, Vinylpolymer oder anderen Polymeren bestehen. Diese Schriftträger können coronabehandelt oder mit einer Haftschicht versehen sein, wie aus dem Stand der Technik bekannt ist.

Die in der Magnetschicht gemäß dem Stand der Technik verwendeten Bindemittel sind normalerweise Polyurethane, die im allgemeinen aus Diisocyanaten, Polyesterolen als Weichsegmente, höherfunktionellen niedermolekularen Alkoholen und Aminoalkoholen sowie kurzkettigen Diolen als Kettenverlängerer aufgebaut sind. Daneben sind aber auch Polycarbonat-Polyurethane sowie aus anderen Segmenten aufgebaute Polyurethane bekannt.

Das polymere Bindemittel kann aber auch eine Mischung von Polyurethan mit Copolymeren aus Vinylchlorid, Vinylacetat und Vinylalkohol, Copolymeren aus Vinylidenchlorid und Acrylnitril, Polyvinylacetalen wie beispielsweise Polyvinylformal oder Cellulosederivaten wie Nitrocellulose sowie Phenoxyharzen und Epoxyharzen sein.

Die genannten Bindemittel können als unvernetzte oder vernetzte Matrix vorliegen, wobei als Vernetzungsmittel im allgemeinen polyfunktionelle Isocyanate, gegebenenfalls durch einen Vernetzungskatalysator unterstützt, fungieren.

Als Magnetpulver geeignet sind die üblichen, beim Aufbau der magnetischen Aufzeichnungsträger verwendeten Pigmente wie γ-Fe₂O₃, Fe₃O₄, berthollide Eisenoxide Feoₓ mit x > 1,33 < 1,50, CrO₂, Metallpulver oder Metallpulver-Legierungen und deren Gemische.

Das alkalische Behandlungsmedium besteht aus den Kaliumsalzen von mehrfach ungesättigten Fettsäuren (Trivialname Schmierseife), einem oder mehreren organischen Lösungsmitteln sowie gegebenenfalls Wasser und einem Katalysator.

Daß nicht allein, so wie aus dem zitierten Stand der Technik bekannt, der hohe pH-Wert von > 10 ausschlaggebend für eine komplette und schnelle Ablösung der Magnetschicht ist, zeigt die Vergleichsprobe 3 von Beispiel 1, bei welcher eine Zusammensetzung, bestehend aus Newamatic ^{R}, ein Spülmittel mit einem pH-Wert von 12 und den angegebenen Lösungsmitteln verwendet wurde. Hierbei wurde keine Ablösung innerhalb 1 Stunde bei Siedetemperatur beobachtet.

Wird in der genannten Zusammensetzung das Kaliumsalz von mehrfach ungesättigten Fettsäuren durch beispielsweise das Natriumsalz von gesättigten Fettsäuren (Trivialname Kernseife) ersetzt, so ist die Ablösung schwieriger oder gar nicht zu bewerkstelligen.

Als organische Lösungsmittel sind N-Methylpyrrolidon, Dimethylformamid, Dimethylsulfoxid, Methylethylketon, Dibutylether, Tetrahydrofuran, 1,4-Dioxan, Aceton, Cyclohexanon, Toluol, Xylol, Chloroform, Methylenchlorid, Trichlorethylen, Isopropanol, Methanol, Ethanol, Butanon und Ethantetrachlorid sowie insbesondere Gemische hiervon sowie Gemische mit Wasser geeignet.

Als Katalysator hat sich insbesondere der basische Katalysator Natriummethanolat, Kalium tert.butylat, Naoxalatessigester oder Dimethylaminopyridin bewährt, weiterhin geeignet ist aber auch O-Butyltitanat oder einfach NaOH als Zusatz.

Zusätzlich können auch in Kombination mit den oben genannten Komponenten Tenside zur Ablösung der Magnetschicht eingesetzt werden. Beispiele für geeignete Tenside sind höhere Fettsäuren oder Oxoalkohole, die mit Ethylenoxid, Propylenoxid oder Butylenoxid alkoxyliert wurden, so daß sie im Lösungsmittelsystem löslich oder dispergierbar sind, zum Beispiel C-13 oder C-15 Oxoalkohol mit 3-Ethylenoxid ethoxyliert.

Die oben beschriebene Zusammensetzung arbeitet, wie bereits dargelegt, im alkalischen Bereich, welcher von pH 9 bis pH 13, bevorzugt von pH 10 bis pH 12, geht.

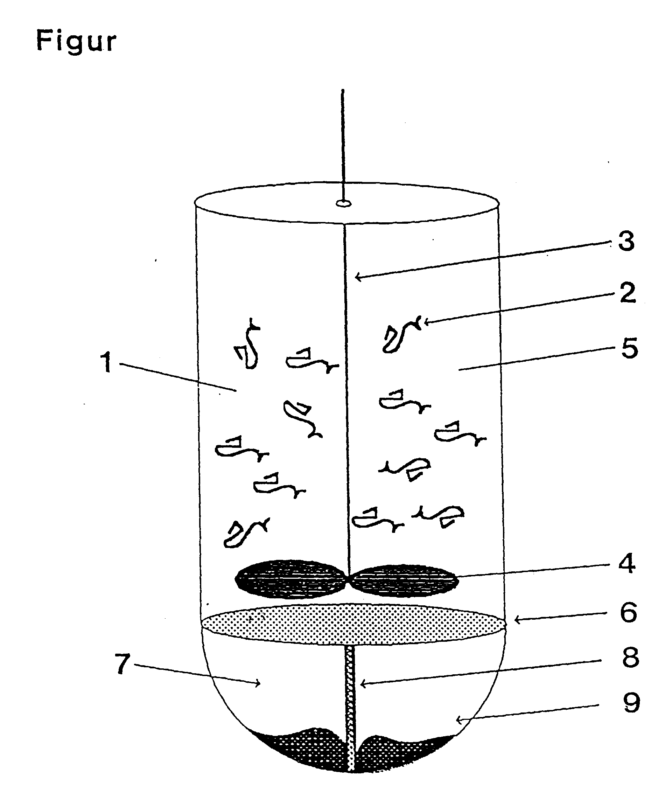

Zur Durchführung des erfindungsgemäßen Verfahrens wird der magnetische Aufzeichnungsträger in kleine oder mittelgroße Stücke zerschnitten und mit der angegebenen Spüllösung versetzt. Dies kann zweckmäßigerweise in einem Reaktorraum geschehen, wie er in der Figur dargestellt ist. Im oberen Teil (1) des Reaktorraums werden die Folienschnitzel (2) eingebracht und durch den Rührer (3) mit den Flügeln (4) zu einer gründlichen Durchmischung mit der im Reaktorraum befindlichen Behandlungsflüssigkeit (5) gebracht. Die Reaktionstemperatur liegt nahe dem Siedepunkt, also im Bereich von 60 bis 95 °C, vorzugsweise 85 - 90 °C. Vorteilhaft ist auch der Zusatz von kleinen Stahlstiften oder aus Stahl oder Keramik bestehenden Mahlkugeln, um eine optimale Reibung an der Magnetschicht zu erzielen.

Nach einigen Minuten ist der Entschichtungsvorgang beendet. Die Abtrennung des Magnetpulvers von der Trägerfolie kann, wie in der Figur dargestellt, so erfolgen, daß zwischen oberem Teil (1) und unterem Teil (7) des Reaktorraums eine Siebplatte (6) angeordnet ist, die so feinmaschig ist, daß sie nur für das abgelöste Magnetpulver, nicht aber für die Folienschnitzel des magnetischen Aufzeichnungsträgers durchlassig ist. Infolgedessen sammelt sich das abgelöste Magnetpulver aufgrund der Gravitationskraft im unteren Reaktorraum (7) an und verbleibt dort. Eine Verwirbelung findet nicht statt, da die Wirkung des Rührers im unteren Reaktorraum bedingt durch die Siebplatte vernachlässigbar klein ist. Zusätzlich kann der untere Reaktorraum durch mehrere Trennwände (8) geteilt sein.

Die Reaktionsdauer ist abhängig von der Zusammensetzung der verwendeten Spüllösung und von der Behandlungstemperatur, sie beträgt maximal eine Stunde. Um die Reaktionsdauer zu verkürzen, ist neben dem intensiven Rühren der kleingeschnittenen Magnetbandabfälle auch die Einwirkung von Ultraschall zu bevorzugen.

Das abgelöste Magnetpulver kann anschließend durch Waschen mit dem verwendeten Lösungsmittelgemisch oder mit reinen Lösemitteln vollständig von den Folienschnitzeln abgetrennt werden. Günstig ist dabei die Zugabe geeigneter Flockungsmittel wie Copolymere auf Basis von Acrylamid oder aus dem erwähnten Stand der Technik bekannte Magnetabscheider wie Permanent- oder mit Wechselstrom beaufschlagte Magnete.

Die Folienschnitzel können anschließend im Luftstrom oder Vakuum getrocknet und dann einer weiteren Verwendung zugeführt werden. Es hat sich bei Durchführung des erfindungsgemäßen Verfahrens gezeigt, daß die Schichtträger-Schnitzel im wesentlichen unveränderte Eigenschaften gegenüber erstmalig eingesetzten Schichtträgern besitzen.

Der Magnetschlamm, bestehend aus Lösungsmittel und Magnetpulver, wird vom Lösungsmittel befreit und das Magnetpulver im Vakuum getrocknet. Es kann mit bestehenden Technologien wieder zu magnetischen Pigmenten verarbeitet werden. Weiterhin hat sich gezeigt, daß die beschriebenen Behandlungslösungen für mehrfache Verwendung geeignet sind, also nicht nach jedem Ablösevorgang vernichtet werden müssen.

### Beispiel 1

Eine magnetische Dispersion mit der Zusammensetzung

| | Gew.-Teile |
|---|---|
| feinteiliges nadelförmiges CrO₂ | 11 |
| hochmolekulares Polyurethan | 1,6 |
| Vinylcopolymer VAGH | 0,6 |
| Gleitmittel | 0,04 |
| Dispergator | 0,2 |
| Vernetzer Diisocyanat | 0,4 |
| Lösemittel | 23 |

wird auf einen unmagnetischen 15 µm dicken Polyethylenterephthalat-Schichtträger mit einer Trockendicke von 3,5 µm mittels eines üblichen Extrudergießers gegossen, anschließend getrocknet, kalandriert und einer Temperier-Nachbehandlung unterzogen. Zur Herstellung von Videoband werden die beschichteten Folien in Längsrichtung in Halbzoll-Breite (1,27 cm) geschnitten. Der so hergestellte magnetische Aufzeichnungsträger wird in 5 bis 30 cm lange Stücke zerschnitten und zum Zweck der Wiedergewinnung von Schichtträgermaterial und Magnetpulver nach dem erfindungsgemäßen Verfahren folgender Behandlung gemäß der Tabelle 1 unterzogen.

Die Folienstücke werden in einem Rundkolben vorgelegt und das erfindungsgemäße Lösungsmittelgemisch zugegeben. Die eingesetzten Mengen sind der in Tabelle angegeben. Es wird unter Rühren erhitzt. Nach der in der Tabelle angegebenen Zeit innerhalb derer die Beschichtung abgelöst ist, läßt man abkühlen und filtriert über ein engmaschiges Sieb. Es wird mit Tetrahydrofuran (THF) und Wasser gewaschen und die verbleibenden Folienstücke im Trockenschrank getrocknet. Das abgewaschene Magnetpulver wird vom Lösungsmittel befreit und im Vakuum getrocknet.

Die angegebene Spüllösung hat jeweils einen pH-Wert von 12. Die Reaktionstemperatur entsprach der Siedetemperatur der Spüllösung. Diese Spüllösung kann mehrfach wiederverwendet werden, was einen zusätzlichen Vorteil darstellt.

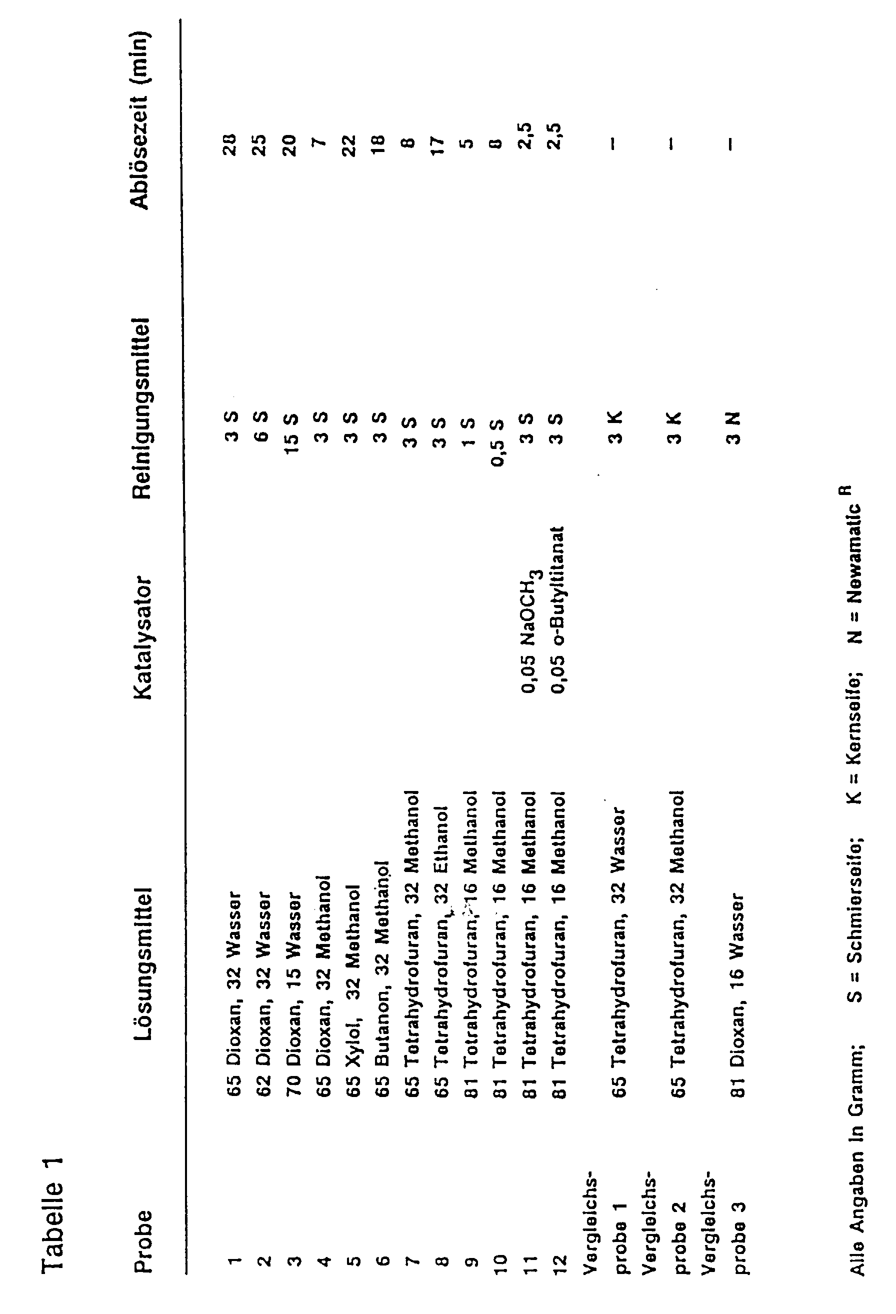

### Beispiel 2 (alle Angaben Gewichtsteile)

In einer Mischung von 58 Teilen Tetrahydrofuran, 12 Teilen Methanol und 1,2 Teilen Schmierseife wurden jeweils drei etwa 3 cm lange Streifen von handelsüblichen Halbzoll (1,27 cm) breiten Videobändern bei Siedetemperatur behandelt. Dabei wurden folgende Ergebnisse erzielt.

**Tabelle 2**

| Videoband-Sorte | Ablösezeit |
|---|---|
| RELAX HGX E240 | 30 Minuten |
| PDM EHG E240 | 5 Minuten |
| Scotch S-VHS | 10 Minuten |
| Scotch EG+ E180 | 10 Minuten |
| Unilever SUM HG E180 | 10 Minuten |
| TDK E-HG | 5 Minuten |
| JVC SX 195 | 10 Minuten |
| Kendo SHG E195 | 10 Minuten |
| Sony V | 3 Minuten |
| Maxell HGX Black E180 | 9 Minuten |
| Maxell HGX Black prof. | 7 Minuten |
| Maxell XR-S S-VHS | 10 Minuten |
| Maxell VX 195 | 10 Minuten |
| Fuji HQ E195 | 30 Minuten |
| Fuji S-HG E180 | 30 Minuten |
| Kodak HS 240 | 7 Minuten |

### Beispiel 3

In einer Mischung wie in Beispiel 2 wurden jeweils drei etwa 30 mm lange 3,81 mm breite Streifen handelsüblicher Audiocassettenbänder bei Siedetemperatur behandelt. Die Ergebnisse zeigt die Tabelle 3.

**Tabelle 3**

| Bandsorte | Ablösezeit |
|---|---|
| Sony | 2 Minuten |
| UXS Type II High CrO₂ | 2 Minuten |
| UX Pro90 LEC II Type II | 2 Minuten |
| HF 90.Type I | 2 Minuten |
| Esprit II | 2 Minuten |
| Fuji GT-IIx90 Type II | 2 Minuten |
| Fuji JP-IIx90 Double Coating | 3 Minuten |
| TDK D 60 Type I - | 5 Minuten |
| TDK SF 60 Type II | 2 Minuten |
| TDK SA-X Type II | 2 Minuten |
| TDK SA90 High Position | 5 Minuten |
| Maxell XL II 90 | 5 Minuten |
| Maxell XL II S 90 | 30 Minuten |
| Maxell UR-F 90 | 3 Minuten |
| Maxell UR 90 | 4 Minuten |

### Beispiel 4

Ein handelsübliches Videoband wurde in einer Mischung nach Beispiel 2 bei Siedetemperatur behandelt, jedoch wurde der Anteil an Schmierseife geändert sowie Wasser zugegeben. Die Ergebnisse gehen aus der Tabelle 4 hervor.

**Tabelle 4**

| Schmierseife | Wasser | Ablösezeit |
|---|---|---|
| 1.2 Teile | -- | 15 Minuten |
| 1.2 Teile | 0,2 | 23 Minuten |
| 6 Teile | 0,2 | 15 Minuten |
| 1.2 Teile | 0,6 | 26 Minuten |

### Beispiel 5

In einer Mischung wie in Beispiel 2 wurden jeweils 5 cm² in kleingeschnittener Form von handelsüblichem doppelseitig beschichtetem Diskettenmaterial bei Siedetemperatur behandelt. Die Ergebnisse gehen aus der Tabelle 5 hervor.

**Tabelle 5**

| Diskettensorte | Ablösezeit |
|---|---|
| RPS 3,5" | 2 Minuten |
| Teijin 3,5" | 5 Minuten |
| Nippon-Columbia 3,5" | 4 Minuten |
| BASF 5,25" | 4 Minuten |
| BASF 3,5" | 4 Minuten |

### Beispiel 6

In einer Mischung wie in Beispiel 2 wurden jeweils 5 cm² in kleingeschnittener Form eines handelsüblichen halbzollbreiten (1,27 cm) Computerbandes, welches für die Typ 3480-Mono-Spulencassette bestimmt war und wobei die magnetische Schicht auf eine cornonabehandelte PET-Folie gegossen war, bei Siedetemperatur mit verschiedenen Zusätzen behandelt, wobei die in der Tabelle 6 niedergelegten Ergebnisse erhalten wurden.

**Tabelle 6**

| Zusatz (Teile) (min) | pH-Wert | Ablösezeit |
|---|---|---|
| 0,01 NaOH | 9 | 9 |
| 1,2 Kalium tert.butylat | 9 | 30 |
| 0,6 Na-oxalessigester | 11 | 3 |
| 1,2 Dimethylaminopyridin | 11 | 30 |

### Beispiel 7

Entsprechende Ergebnisse wie in Beispiel 6 wurden erhalten, wenn wie in Beispiel 6 verfahren wurde mit der Ausnahme, daß die magnetische Schicht auf einen mit einer 0,2 µm dicken Haftschicht versehenen PET-Schichtträger gegossen war.

### Beispiel 8

Entsprechende Ergebnisse wie in Beispiel 6 wurden erhalten, wenn in der Lösemittel-Mischung die 12 Teile Methanol durch gleiche Mengen an Ethanol, i-Propanol oder Toluol ersetzt wurden.

### Beispiel 9

Es wurde wie in Beispiel 6 verfahren, jedoch wurden 12 Teile Schmierseife verwendet. Dann betrug (bei Fehlen weiterer Zusätze aus Tabelle 6) die Ablösezeit 30 Minuten.

### Beispiel 10

Es wurde verfahren wie in Beispiel 6, jedoch wurden 58 Teile Dioxan, 12 Teile Ethanol und 12 Teile Schmierseife als Behandlungslösung eingesetzt. Die Ablösezeit betrug 30 Minuten.

Wenn man die Beispiele mit den Vergleichsbeispielen betrachtet, so ist zu erkennen, daß durch geeignete Wahl der Behandlungslösung sowie der Behandlungsparameter ein vollständiges Ablösen der Magnetschicht ohne Schädigung des Polyethylenterephthalat-Schichtträgers in kurzer Behandlungszeit erreichbar ist.

## Patentansprüche

1. Verfahren zur Wiedergewinnung von Rohmaterialien aus kleingeschnittenen Abfällen von magnetischen Aufzeichnungsträgern, bestehend aus einem polymeren Schichtträger und einer darauf befindlichen Magnetschicht, bei der feinteiliges Magnetpulver in vernetztem oder unvernetztem polymeren Bindemittel dispergiert ist und wobei das Magnetpulver und das Schichtträgermaterial durch Behandlung in einem alkalischen Medium wiedergewonnen wird, dadurch gekennzeichnet, daß
- der kleingeschnittene Abfall in einer Lösung, bestehend aus dem Kaliumsalz von mehrfach ungesättigten Fettsäuren, einem oder mehreren organischen Lösungsmitteln und/oder Wasser unter mechanischer Einwirkung behandelt wird,
- anschließend das abgelöste Magnetpulver durch Waschen oder Sedimentieren oder im Magnetabscheider vom Schichtträger getrennt wird.

2. Verfahren nach Anspruch 1, dadurch gekennzeichnet, daß zusätzlich ein Katalysator eingesetzt ist.

3. Verfahren nach Anspruch 1, dadurch gekennzeichnet, daß das organische Lösungsmittel Dioxan, N-Methylpyrrolidon, Dimethylformamid, Dimethylsulfoxid, Dibutylether, Methylethylketon, Tetrahydrofuran, 1,4-Dioxan, Aceton, Cyclohexanon, Toluol, Xylol, Isopropanol, Methanol, Ethanol, Butanon oder Gemische davon sind.

4. Verfahren nach Anspruch 2, dadurch gekennzeichnet, daß der Katalysator Natriummethanolat, Kalium tert.butylat, Na-oxalatessigester, Dimethylaminopyridin oder o-Butyltitanat ist.

5. Verfahren nach den Ansprüchen 1 - 4, dadurch gekennzeichnet, daß die Ablösungsreaktion bei einem pH-Bereich von 10 bis 12, einem Temperaturbereich von 60 bis 95 °C unter Rühren und/oder Einwirken von Ultraschall durchgeführt wird.

6. Verfahren nach den Ansprüchen 1 - 5, dadurch gekennzeichnet, daß zusätzlich Tenside zur Behandlung der Ablösung der Magnetschicht eingesetzt werden.

7. Verfahren nach Anspruch 6, dadurch gekennzeichnet, daß als Tenside höhere Fettsäuren oder Oxoalkohole, welche mit Ethylenoxid, Propylenoxid oder Butylenoxid alkoxyliert sind, verwendet werden.

## Claims

1. A process for recovering raw materials from finely chopped wastes of magnetic recording media, consisting of a polymeric substrate and a magnetic layer present thereon, in which finely divided magnetic powder is dispersed in crosslinked or uncrosslinked polymeric binder, the magnetic powder and the substrate material being recovered by treatment in an alkaline medium, wherein
the finely chopped waste is treated in a solution consisting of the potassium salt of a polyunsaturated fatty acid and one or more organic solvents or water while being subjected to mechanical action, and the magnetic powder removed is then separated from the substrate by washing or sedimentation or in a magnetic separator.

2. A process as claimed in claim 1, wherein a catalyst is additionally used.

3. A process as claimed in claim 1, wherein the organic solvent is dioxane, N-methylpyrrolidone, dimethylformamide, dimethyl sulfoxide, dibutyl ether, methyl ethyl ketone, tetrahydrofuran, 1,4-dioxane, acetone, cyclohexanone, toluene, xylene, isopropanol, methanol, ethanol, butanone or a mixture thereof.

4. A process as claimed in claim 2, wherein the catalyst is sodium methylate, potassium tert-butylate, sodium oxaloacetate, dimethylaminopyridine or o-butyl titanate.

5. A process as claimed in any of claims 1 to 4, wherein the delamination reaction is carried out at a pH of from 10 to 12, at from 60 to 95°C while stirring or with the action of ultrasonics.

6. A process as claimed in any of claims 1 to 5, wherein surfactants are additionally used for treatment in the delamination of the magnetic layer.

7. A process as claimed in claim 6, wherein the surfactants used are higher fatty acids or oxo alcohols which have been alkoxylated with ethylene oxide, propylene oxide or butylene oxide.

## Revendications

1. Procédé de récupération de matériaux bruts à partir de déchets découpés à de petites dimensions, venant de supports d'enregistrement magnétiques, constitués d'un support de couche en polymère et d'une couche magnétique se trouvant au-dessus, pour laquelle une poudre magnétique finement divisée est dispersée dans un liant polymère réticulé ou non réticulé, et la poudre magnétique et le matériau du support de couche étant récupérés par traitement dans un milieu alcalin, caractérisé par le fait que
- le déchet découpé de petite taille est traité dans une solution constituée de sel de potassium issu d'acides gras à insaturation multiple, d'un ou de plusieurs solvants organiques et/ou d'eau, avec un effet mécanique,
- la poudre magnétique désolidarisée étant ensuite séparée de la couche support par lavage ou sédimentation ou bien dans un séparateur magnétique.

2. Procédé selon la revendication 1, caractérisé par le fait qu'en plus est utilisé un catalyseur.

3. Procédé selon la revendication 1, caractérisé par le fait que le solvant organique est un dioxane, N-méthylpyrrolidone, diméthylformamide, diméthylsulfoxide, dibutyléther, méthyléthylcétone, tétrahydrofurane, 1,4-dioxane, acétone, cyclohexanone, toluène, xylène, isopropanol, méthanol, éthanol, butanone ou des mélanges de ceux-ci.

4. Procédé selon la revendication 2, caractérisé par le fait que le catalyseur est de l'éthanolate de sodium, du tert-butylate de potassium, un oxalatester d'acide acétique-Na, du diméthylaminopyridine ou du o-butyltitanate.

5. Procédé selon les revendications 1 à 4, caractérisé par le fait que la réaction de désolidarisation est conduite dans une plage de pH comprise entre 10 et 12, une plage de températures comprise entre 60 et 95°C, avec agitation et/ou effet d'ultrasons.

6. Procédé selon les revendications 1 à 5, caractérisé par le fait qu'en plus sont utilisés des tensioactifs pour effectuer le traitement de désolidarisation de la solution de la couche magnétique.

7. Procédé selon la revendication 6, caractérisé par le fait qu'on utilise comme tensioactif des acides gras supérieurs ou des oxoalcools, alkoxylés avec de l'oxyde d'éthylène, de l'oxyde de propylène ou de l'oxyde de butylène.
